# EUROPEAN PATENT APPLICATION

(11) **EP 4 480 700 A1**
(43) Date of publication of application: **25.12.2024**
(21) Application number: 24181494.6
(22) Date of filing: 11.06.2024
(51) Int. Cl.: B32B 27/10, B32B 3/26, B32B 7/12, B32B 27/08, B32B 29/00, B32B 29/06

(54) **MULTILAYER MATERIAL FOR SEALING PACKAGES AND METHOD FOR PACKAGING A PRODUCT USING IT**

(30) Priority: 22.06.2023 IT 202300012978
(71) Applicant: G. Mondini SpA, 25033 Cologne Bresciano (BS) (IT); Bernucci, Nicolò, 20154 Milano MI (IT)
(72) Inventor: BERNUCCI, Nicolò, 20154 Milano MI (IT); PADERNI, Daniel, 25045 CASTEGNATO BS (IT)
(74) Representative: Ponchiroli, Simone

(57) **Abstract**

A method for packaging a product, wherein a multi-layer material is heated to a temperature for thermoforming of the first main layer and is applied with a skin technique to a support which supports a product. The multi-layer material comprises a thermoformable polymeric material first main layer and a cellulose material-based second main layer. The first main layer has a thickness of between 10 µm and 200 µm and the second main layer has a grammage of between 30 and 250 g/m². Particular embodiments of the multi-layer material are also provided.

## Description

This invention relates to a multi-layer material for sealing packs and a method for packaging a product which uses that material.

This invention was developed in particular in the context of packaging products using the so-called skin technique, but the multi-layer material which was defined may also be used with other packaging techniques.

In more detail, this invention is advantageously intended for packaging limited-thickness products, especially but not only in the food sector, such as sliced cold cuts or cheeses, slices of salmon, steaks and the like.

As is known, skin packaging technology involves making a polymeric sealing film adhere both to the product and to the support below, in such a way that the product remains contained between the support and the sealing film, with the latter adhering to the product by following its shape (like a skin, from which the name skin derives).

To make the products marketed more attractive, very often products packaged with the skin technique are contained in a further outer package made of paperboard on which photographs/images and all important information are printed.

However, the prior art technology has several disadvantages.

Firstly, given that for skin packaging the polymeric film must be heated to a relatively high temperature, in such a way as to maximise its thermoformability, to guarantee that the film itself is not damaged by the heating it is necessary to use films which are relatively thick, in most cases between 100 and 150 µm, with a consequent relatively high consumption of plastic material.

Secondly, the need to use a paperboard additional outer package in order to make the product more commercially attractive, leads to further costs linked both to the consumption of paperboard and the need to provide for forming of the second package.

In this context the technical purpose which forms the basis of this invention is to make a multi-layer material for sealing packs and to define a method for packaging a product which uses it, which overcome the above-mentioned disadvantages.

In particular the technical purpose of this invention is to make a multi-layer material for sealing packs and to define a method for packaging a product which uses it, which allow the use of less polymeric material than is currently used.

It is further the technical purpose of this invention to make a multi-layer material for sealing packs and to define a method for packaging a product which uses it, which allow the avoidance of the use of a second package made of paperboard containing the skin pack.

It is also the technical purpose of this invention to make a multi-layer material for sealing packs and to define a method for packaging a product which uses it, which have a lower production cost than prior art types of packaging which also use the paperboard second package.

At least one of the technical purpose indicated is achieved by a multi-layer material for sealing packs and by a method for packaging a product which uses it, as defined, respectively, in independent claim 1 and in claim 18. Particular embodiments of this invention are defined in the corresponding dependent claims.

Further features and the advantages of this invention will be more apparent from the detailed description which follows of several preferred, non-limiting embodiments, of a multi-layer material for sealing packs and of a method for packaging a product which uses that material.

The first innovative aspect forming the basis of this invention is the definition of a new multi-layer material for top sealing, which comprises both a thermoformable polymeric material first main layer, and a cellulose material-based second main layer.

In the context of this invention, the indication that the first main layer is thermoformable is intended to indicate both polymeric materials of the type expressly marketed for thermoforming applications, and polymeric materials which, although having a lower degree of thermoformability, can in any case be shaped by heating, deformation and subsequent cooling.

In some preferred embodiments, the multi-layer material is constituted exclusively of the first main layer, of the second main layer.

In order to guarantee coupling between the first main layer and the second main layer, at least a first side of the first main layer, the one intended to be coupled to a corresponding first side of the second main layer, may advantageously be constituted of a polymer with intrinsic adhesive capability, for example a low melting point polymer.

In some embodiments, in contrast, the multi-layer material also comprises an adhesive layer interposed between the first main layer and the second main layer, suitable for keeping them coupled in normal conditions of use.

In some preferred embodiments the multi-layer material is constituted exclusively of the first main layer, of the second main layer and of the adhesive layer.

In some embodiments, both the first main layer, and the second main layer are in turn constituted of a plurality of coupled secondary layers.

The adhesive layer is in contact with a first side of the first main layer and a first side of the second main layer.

The adhesive layer may be constituted of any adhesive substance suitable for the purpose, such as the adhesive made and marketed with the name Resicol F415 by the company LEUENBERGER+C SPA with registered office in Crema (Cremona province), Italy.

The second side of the first main layer, directed the opposite way to the first side, is advantageously configured to be sealed to the support.

The second side of the second main layer, directed the opposite way to the first side, is advantageously configured to constitute the upper part of the finished pack.

The second main layer has a grammage of between 30 and 250 g/m², preferably between 50 and 150 g/m², and even more preferably between 90 and 110 g/m².

In some embodiments the second main layer comprises, or is constituted of, paper coated at the second side.

In some embodiments the second main layer comprises, or is constituted of, two side coated paper (therefore coated both on the first side and on the second side).

The coated side of the paper is advantageously printed or is configured to be printed.

In some embodiments the second main layer is constituted of uncoated paper or solid board, for example type GC1 or GC2.

The first main layer has a thickness of between 10 µm and 200 µm.

In some embodiments the first main layer has a thickness which is less than 100 µm.

In some embodiments the first main layer has a thickness of between 25 µm and 100 µm.

In some preferred embodiments the first main layer has a thickness of between 25 µm and 60 µm.

In some embodiments, the first main layer is constituted of a single secondary layer of material.

In some embodiments, the first main layer comprises a plurality of secondary layers each of which comprises a polymeric material. The first main layer may even comprise ten or more secondary layers.

Although each secondary layer may be made with different materials, in some embodiments, each secondary layer comprises a polymeric material selected in the group comprising: Polyethylene (PE), Ethylene-vinyl acetate (EVA), Ethylene vinyl alcohol (EVOH), Polyamide (PA), Polyvinylidene chloride (PVDC), Polyester, Ethylene/Acrylic ionomer (EAI), a mixture of Polyester and

Polyethylene, Ethylene/propylene copolymer (EPC), and mixtures of them.

Advantageously, at its second side, the first main layer comprises a sealing secondary layer configured to allow hot adhesion of the first main layer to a pack support, for example a secondary layer constituted of polyethylene or polyester.

In some embodiments the first main layer comprises a secondary layer which is a barrier to oxygen, in particular a secondary layer constituted of EVOH, PA or PVDC.

Advantageously, the secondary layers of the first main layer may be coupled to each other with adhesive and/or co-extruded. In the case of co-extrusion they may even be cross-linked.

Some preferred compositions for the first main layer are as follows (the quantities relate to the set of all of the secondary layers present):
a) Polyethylene between 45% and 55%; Polyamide between 36% and 46% and Ethylene vinyl alcohol between 7% and 11%;
b) Polyethylene between 55% and 65%; Ethylene-vinyl acetate between 27% and 33%; Ethylene vinyl alcohol between 8% and 10% and other in a quantity less than 2%;
c) Ethylene-vinyl acetate between 62% and 72%; Polyethylene between 11% and 15%; Ethylene vinyl alcohol between 9% and 13% and Polyester between 7% and 11%;
d) Polyethylene between 68% and 78% and Polyamide between 22% and 32%;
e) Ethylene/Acrylic ionomer between 40% and 48%; Ethylene-vinyl acetate between 19% and 23%; Ethylene vinyl alcohol between 12% and 16%; Polyethylene between 10% and 14% and Polyester between 7% and 11%;
f) Polyester in a quantity greater than 99% and other in a quantity less than 1%;
g) Polyester in a quantity greater than 98%; Polyethylene in a quantity less than 2% and other in a quantity less than 1%;
h) Polyethylene between 64% and 74%; Polyamide between 14% and 20%; Ethylene vinyl alcohol between 8% and 12% and Ethylene/Acrylic ionomer between 3% and 5%;
i) Polyamide between 45% and 55%; Polyethylene between 44% and 54% and other in a quantity less than 1%;
j) Polyethylene 100%
k) Polyethylene between 46% and 56%; Polyester between 27% and 33%; Ethylene/propylene copolymer between 7% and 11%; Ethylene vinyl alcohol between 5% and 7% and Adhesive between 3% and 5%;
l) Polyethylene between 53% and 63%; Polyester between 27% and 33%; Ethylene vinyl alcohol between 6% and 10% and Adhesive between 3% and 5%.
m) Polyethylene between 57% and 67%; Polyester between 24% and 30%; Ethylene vinyl alcohol between 5% and 9% and Adhesive between 3% and 5%.

For each range indicated above for which two limit values are expressly indicated, the preferred value is the one at the centre of the range (e.g.: for a range between 3% and 5% the preferred value is 4%).

Polymeric materials with compositions within the ranges indicated are easy to find on the market.

Below there are also several examples of structures and compositions of the first main layer which may be adopted using commercial materials, such as those marketed by the Bolloré group with the brands Lidtec^{®} and Bolfresh^{®}, those marketed by the company Amcor with the brand SkinTite^{™} VSP, those marketed by the company Klockner Pentaplast with the brands FlexiLam^{®}, FlexiLid^{®} and FlexiSkin^{®}, or others marketed by the Sealed Air Corporation group, for example with the brand names VST200E and VST0250.

The following list shall be understood as being provided by way of example only and not as an exhaustive list of all of the first main layers which may be used in the context of this invention.

### Example 1

Secondary layers present:
1 (Sealing) Polyethylene (PE)
2 Polyethylene (PE)
3 Polyamide (PA)
4 Ethylene vinyl alcohol (EVOH)
5 Polyamide (PA)
6 Polyethylene (PE)
7 Polyamide (PA)

Total thickness: 33 µm.

### Example 2

Secondary layers present:
1 (Sealing) Polyester
2 Ethylene-vinyl acetate (EVA)
3 Ethylene-vinyl acetate (EVA)
4 Polyethylene (PE)
5 Ethylene vinyl alcohol (EVOH)
6 Polyethylene (PE)
7 Ethylene-vinyl acetate (EVA)
8 Ethylene-vinyl acetate (EVA)
9 Polyethylene (PE)

Total thickness: 75 µm.

### Example 3

Secondary layers present:
1 (Sealing) Polyethylene (PE)
2 Polyethylene (PE)
3 Ethylene-vinyl acetate (EVA)
4 Polyethylene (PE)
5 Ethylene vinyl alcohol (EVOH)
6 Polyethylene (PE)
7 Ethylene-vinyl acetate (EVA)
8 Polyethylene (PE)
9 Polyethylene (PE)

Total thickness: 100 µm.

### Example 4

Secondary layers present:
1 (Sealing) Polyester
2 Ethylene-vinyl acetate (EVA)
3 Ethylene/Acrylic ionomer (EAI)
4 Polyethylene (PE)
5 Ethylene vinyl alcohol (EVOH)
6 Polyethylene (PE)
7 Ethylene/Acrylic ionomer (EAI)
8 Ethylene/Acrylic ionomer (EAI)
9 Polyethylene (PE)

Total thickness: 100 µm.

### Example 5

Secondary layers present:
Resin\Polyester Mixture, Polyethylene (PE)
Total thickness: between 27 and 33 µm.

### Example 6

Secondary layers present:
Resin\Polyester Mixture
Total thickness: 35 µm.

### Example 7

Secondary layers present:
1 (Sealing) Polyethylene (PE)
2 Polyethylene (PE)
3 Polyethylene (PE)
4 Polyethylene (PE)
5 Polyethylene (PE)

Total thickness: 15 µm.

### Example 8

Secondary layers present:
1 (Sealing) Polyethylene (PE)
2 Polyethylene (PE)
3 Polyamide (PA)
4 Polyamide (PA)
5 Polyamide (PA)
6 Polyethylene (PE)
7 Polyamide (PA)

Total thickness: 25 µm.

### Example 9

Secondary layers present:
1 (Sealing) Polyethylene (PE)
2 Polyethylene (PE)
3 Ethylene/Acrylic ionomer (EAI), Polyamide (PA)
4 Ethylene vinyl alcohol (EVOH), Polyamide (PA)
5 Ethylene/Acrylic ionomer (EAI), Polyamide (PA)
6 Polyethylene (PE)
7 Polyethylene (PE)

Total thickness: 25 µm.

### Example 10

Secondary layers present:
1 (Sealing) Polyethylene (PE)
2 Polyethylene (PE)
3 Ethylene vinyl alcohol (EVOH)
4 Polyethylene (PE)
5 Polyethylene (PE)
6 Adhesive
7 Polyester

Total thickness: 61 µm.

### Example 11

Secondary layers present:
1 (Sealing) Polyethylene (PE)
2 Polyethylene (PE)
3 Ethylene vinyl alcohol (EVOH)
4 Polyethylene (PE)
5 Polyethylene (PE)
6 Adhesive
7 Polyester

Total thickness: between 39 and 85 µm.

### Example 12

Secondary layers present:
1 (Sealing) Ethylene vinyl alcohol (EVOH), Ethylene/propylene copolymer (EPC), Polyethylene (PE)
2 Adhesive
3 Polyester

Total thickness: between 39 and 54 µm.

### Example 13

Secondary layers present:
1 (Sealing) Polyethylene (PE)
2 Polyethylene (PE)
3 Polyethylene (PE)
4 Polyamide (PA)
5 Polyethylene (PE)
6 Polyamide (PA)
7 Polyethylene (PE)
8 Polyamide (PA)

Total thickness: 65 and 150 µm.

In some embodiments, the first main layer is continuous whilst the second main layer has one or more empty windows. Therefore, in these cases the main material has a thickness equal to only the thickness of the first main layer at the one or more empty windows.

Moreover, advantageously, the first main layer is transparent and the empty windows present therefore, in use, allow the packaged product to be seen.

This invention relates to use of a multi-layer material in accordance with what is described above for sealing at the top, and with a pressure drop relative to the outside environment, a support containing a product. In this way a pack is made in which the first main layer is placed in contact with and stuck to the support and the second main layer is positioned on the outside of the pack. Advantageously, the multi-layer material is used to seal the support containing the product using a skin packaging technique and therefore, by substantially creating a vacuum between the lower support and the multi-layer material. However, in this case, it should be noticed that due to the limited thermoformability of paper, despite vacuum packing, it is possible that in the finished product adhesion of the multi-layer material to the support and to the product (understood as shaping of the multi-layer material on the support and on the product) is slightly less than that commonly obtainable with skin packaging in which exclusively a polymeric film is used.

Moving on to the method for packaging a product according to this invention, which is the practical implementation of the use of the multi-layer material just described, it comprises first a loading step in which the product is positioned on the support. In the context of this invention, the term product means everything inserted into the pack, including any supports for the product itself (for example, in the case of slices of salmon, the product may comprise either only the slices, or also a card on which the slices are laid).

The support may be of any type, the only limitation being that at the top it must have a material capable of allowing adhesion of the first main layer in the ways indicated below.

By way of example, the support may be constituted of a polymeric material, of a material comprising one or more layers of cellulose material which are coated or alternated with one or more layers of polymeric film, of aluminium coated with a polymeric coating, of a multi-layer material of the type described above, etc. When the support is constituted of the multi-layer material of the type described above, or of another thermoformable material, the method may also comprise a thermoforming step for thermoforming the support, preferably an in line thermoforming step.

With regard to type, the support may be of any type: flat, tub-shaped with a flange, tub-shaped without a flange, etc. It may also have any shape and size. For example, the tray may even have multiple compartments and may have features allowing separability of the compartments.

The sheet may have an extent in plan view that is equal to, greater than or less than the extent in plan view of the support.

The product is advantageously placed on a central portion of the support which is surrounded by a perimetric portion of the support itself.

Then there is a positioning step in which a sheet constituted of a multi-layer material made according to this invention is positioned above the support and the product.

During one or more subsequent heating steps the sheet is heated in such a way as to bring the first main layer to a temperature which allows it to be thermoformed, advantageously thermoformed with a skin technique.

Preferably, at least one of the one or more heating steps is carried out by heating the sheet at the second main layer in such a way that the second main layer protects the first main layer relative to the heat source guaranteeing it a gentler heating transient and protecting it against the risk of overheating. Moreover, advantageously, at least one of the one or more heating steps may be carried out by deforming the sheet away from the support, using extraction to suck it into a specially prepared dome (a dome which advantageously will have a height slightly greater than that necessary for housing the product during the heating step).

In some embodiments, the one or more heating steps comprise a pre-heating step carried out before the positioning step, and a main heating step carried out after the positioning step. The pre-heating step may be carried out during a sheet moving step, for example by means of a movable shuttle configured to bring the sheet into a chamber for the skin sealing (the use of movable shuttles for such movements is in itself known).

Once the sheet has been heated the method comprises an extracting step in which the air present between the support and the sheet is extracted to create, between the support and the sheet, a pressure drop, preferably almost a vacuum, as occurs in common skin packaging. During the extracting step it is also possible to press the sheet against the perimetric portion of the support so as to cause it to adhere. This causes adhesion of the sheet to the perimetric portion of the support surrounding the central portion and shaping of the sheet on the product.

In some embodiments, the method also comprises a printing step during which printing is carried out on the second main layer. In other embodiments, in contrast, the second main layer may have already been printed previously. In some embodiments the method also comprises a cutting step during which the sheet is obtained by cutting a web constituted of the multi-layer material according to this invention.

In some embodiments, moreover, the method may comprise a forming step, during which the multi-layer material according to this invention is formed, before using it as a sheet and, if necessary, before cutting it to obtain the sheet.

In general, the forming step comprises a supplying step in which the first main layer and the second main layer separate from each other are picked up, and a coupling step during which the first main layer is coupled to the second main layer.

If the material does not comprise the adhesive layer, the coupling step is advantageously carried out by heating the first main layer in such a way as to activate its adhesive capability (in particular softening the low melting point layer).

When the multi-layer material also comprises the adhesive layer, the forming step also comprises an applying step during which the adhesive layer is applied to at least one of the first main layer or the second main layer (advantageously to the second main layer), and where the coupling step is carried out by interposing the adhesive layer between the first main layer and the second main layer.

If necessary, the forming step may also involve creating the one or more empty windows in the second main layer, before the coupling step, in such a way that, after the coupling step, at the one or more windows the sheet has exclusively the first main layer (advantageously transparent). Advantageously, if the applying step is included, the cutting step is carried out before the applying step, which is carried out by applying the adhesive layer to the second main layer.

This invention brings important advantages.

Firstly, thanks to this invention it was possible to make a multi-layer material for sealing packs and to define a method for packaging a product which uses it, which allow the use of less polymeric material than is currently the case, and/or avoidance of the use of a paperboard second package containing the skin pack.

Secondly, thanks to this invention it was possible to make a multi-layer material for sealing packs and to define a method for packaging a product which uses it, which, incorporating in a single material both the features of thermoformability, and the possibility of making commercially appealing packs, allow a lower production cost than prior art types of packaging which also use the paperboard second package.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A method for packaging a product, comprising the following operating steps:
a loading step in which the product is positioned on the support;
a positioning step in which, above the support and the product, a sheet is positioned, constituted of a multi-layer material comprising a thermoformable polymeric material first main layer having a thickness of between 10 µm and 200 µm and a cellulose material-based second main layer having a grammage of between 30 and 250 g/m²;
one or more heating steps in which the sheet is heated to bring the first main layer to a temperature for thermoforming of the first main layer;
an extracting step in which air present between the support and the sheet is extracted to create a pressure drop between the support and the sheet and to cause the sheet to adhere at least at a perimetric portion of the support which surrounds a central portion of the support itself on which the product is positioned.

2. The method according to claim 1, wherein at least one of the one or more heating steps is carried out by heating the sheet at the second main layer.

3. The method according to claim 1 or 2, wherein the one or more heating steps comprise a pre-heating step carried out before the positioning step during a sheet moving step, and a main heating step carried out after the positioning step.

4. The method according to claim 1, 2 or 3, also comprising a printing step during which printing is carried out on said second main layer.

5. The method according to claim 4, wherein the printing step is carried out in line.

6. The method according to any one of claims 1 to 5, also comprising a cutting step during which said sheet is cut starting from a web constituted of said multi-layer material.

7. The method according to any one of claims 1 to 6, also comprising a forming step during which said multi-layer material is formed, the forming step comprising the following operating steps:
a supplying step in which the first main layer and the second main layer separate from each other are picked up; and
a coupling step during which the first main layer is coupled to the second main layer.

8. The method according to claim 7, wherein the forming step also comprises an applying step during which an adhesive layer is applied to at least one of the first main layer or the second main layer, and wherein the coupling step is carried out by interposing the adhesive layer between the first main layer and the second main layer.

9. The method according to claim 7 or 8, wherein the forming step also involves creating one or more empty windows in the second main layer before the coupling step, in such a way that, after the coupling step, at said one or more windows the sheet has exclusively the first main layer.

10. A multi-layer material for sealing packs usable in the method according to any of claims 1 to 9, the multi-layer material comprising:
a thermoformable polymeric material first main layer; and
a cellulose material-based second main layer;
wherein the first main layer has a thickness of between 10 µm and 200 µm and the second main layer has a grammage of between 30 and 250 g/m²; and wherein the first main layer as a whole has a composition selected from one of the following:
a) Polyethylene between 45% and 55%; Polyamide between 36% and 46% and Ethylene vinyl alcohol between 7% and 11%;
b) Polyethylene between 55% and 65%; Ethylene-vinyl acetate between 27% and 33%; Ethylene vinyl alcohol between 8% and 10% and other in a quantity less than 2%;
c) Ethylene-vinyl acetate between 62% and 72%; Polyethylene between 11% and 15%; Ethylene vinyl alcohol between 9% and 13% and Polyester between 7% and 11%;
d) Polyethylene between 68% and 78% and Polyamide between 22% and 32%;
e) Ethylene/Acrylic ionomer between 40% and 48%; Ethylene-vinyl acetate between 2% and 23%; Ethylene vinyl alcohol between 12% and 16%; Polyethylene between 10% and 14% and Polyester between 7% and 11%;
f) Polyester in a quantity greater than 99% and other in a quantity less than 1%;
g) Polyester in a quantity greater than 98%; Polyethylene in a quantity less than 2% and other in a quantity less than 1%;
h) Polyethylene between 64% and 74%; Polyamide between 14% and 3%; Ethylene vinyl alcohol between 8% and 12% and Ethylene/Acrylic ionomer between 3% and 5%;
i) Polyamide between 45% and 55%; Polyethylene between 44% and 54% and other in a quantity less than 1%;
j) Polyethylene between 46% and 56%; Polyester between 27% and 33%; Ethylene/propylene copolymer between 7% and 11%; Ethylene vinyl alcohol between 5% and 7% and Adhesive between 3% and 5%;
k) Polyethylene between 53% and 63%; Polyester between 27% and 33%; Ethylene vinyl alcohol between 6% and 10% and Adhesive between 3% and 5%;
l) Polyethylene between 57% and 67%; Polyester between 24% and 30%; Ethylene vinyl alcohol between 5% and 9% and Adhesive between 3% and 5%.

11. The method according to any one of claims 1 to 7 or the multi-layer material according to claim 10, wherein the multi-layer material is constituted exclusively of the first main layer and of the second main layer.

12. The method according to any one of claims 1 to 9 or the multi-layer material according to claim 10, wherein the multi-layer material also comprises an adhesive layer interposed between a first side of the first main layer and a first side of the second main layer.

13. The method according to any one of claims 1 to 9 or 12, or the multi-layer material according to claim 12, wherein the multi-layer material is constituted exclusively of the first main layer, of the second main layer and of the adhesive layer.

14. The method according to any one of claims 1 to 9 or 11 to 13, or the multi-layer material according to any one of claims 10 to 13, wherein the first main layer has a thickness which is less than 100 µm, preferably a thickness of between 25 µm and 100 µm.

15. The method according to any one of claims 1 to 9 or 14, or the multi-layer material according to claim 14, wherein the first main layer has a thickness of between 25 µm and 60 µm.

16. The method according to any one of claims 1 to 9 or 11 to 15, or the multi-layer material according to any one of claims 10 to 15, wherein the first main layer comprises a plurality of secondary layers each of which comprises a polymeric material.

17. The method according to any one of claims 1 to 9 or 16, or the multi-layer material according to claim 16, wherein each secondary layer comprises a polymeric material selected in the group comprising: Polyethylene (PE), Ethylene-vinyl acetate (EVA), Ethylene vinyl alcohol (EVOH), Polyamide (PA), Polyester, Ethylene/Acrylic ionomer (EAI), a mixture of Polyester and Polyethylene, Ethylene/propylene copolymer (EPC), Polyvinylidene chloride (PVDC) and mixtures of them.

18. The method according to any one of claims 1 to 9 or 16 to 17, or the multi-layer material according to claim 16 or 17, wherein, at a second side of it, the first main layer comprises a sealing secondary layer configured to allow hot adhesion of the first main layer to a pack support and/or wherein the first main layer comprises a secondary layer which is a barrier to oxygen.

19. The method according to any one of claims 1 to 9 or 16 to 18, or the multi-layer material according to any one of claims 16 to 18, wherein said secondary layers of the first main layer are coupled with adhesive and/or co-extruded.

20. The method according to any one of claims 1 to 9 or 11 to 19, or the multi-layer material according to any one of claims 10 to 19 wherein the second main layer has a grammage of between 50 and 150 g/m ², preferably between 90 and 110 g/m ².

21. The method according to any one of claims 1 to 9 or 11 to 20, or the multi-layer material according to any one of claims 10 to 20, wherein the second main layer comprises one side coated paper, two side coated paper, uncoated paper or solid board.

22. The method according to any one of claims 1 to 9 or 11 to 21, or the multi-layer material according to any one of claims 10 to 21, wherein the second main layer has a second side, directed away from the second main layer, which is printed.

23. The method according to any one of claims 1 to 9 or 11 to 22, or the multi-layer material according to any one of claims 10 to 22, wherein the first main layer is continuous and wherein the second main layer has one or more empty windows, and wherein the main material has a thickness constituted of only the thickness of the first main layer at said one or more empty windows.

24. The method according to any one of claims 1 to 9 or 11 to 23, wherein a support constituted of a multi-layer material according to any one of claims 10 to 23 is used.

25. The method according to any one of claims 1 to 9 or 11 to 24, also comprising a thermoforming step for thermoforming the support.

26. The method according to any one of claims 1 to 9 or 11 to 25, wherein the first main layer as a whole has a composition selected from one of the following:
a) Polyethylene between 45% and 55%; Polyamide between 36% and 46% and Ethylene vinyl alcohol between 7% and 11%;
b) Polyethylene between 55% and 65%; Ethylene-vinyl acetate between 27% and 33%; Ethylene vinyl alcohol between 8% and 10% and other in a quantity less than 2%;
c) Ethylene-vinyl acetate between 62% and 72%; Polyethylene between 11% and 15%; Ethylene vinyl alcohol between 9% and 13% and Polyester between 7% and 11%;
d) Polyethylene between 68% and 78% and Polyamide between 22% and 32%;
e) Ethylene/Acrylic ionomer between 40% and 48%; Ethylene-vinyl acetate between 2% and 23%; Ethylene vinyl alcohol between 12% and 16%; Polyethylene between 10% and 14% and Polyester between 7% and 11%;
f) Polyester in a quantity greater than 99% and other in a quantity less than 1%;
g) Polyester in a quantity greater than 98%; Polyethylene in a quantity less than 2% and other in a quantity less than 1%;
h) Polyethylene between 64% and 74%; Polyamide between 14% and 3%; Ethylene vinyl alcohol between 8% and 12% and Ethylene/Acrylic ionomer between 3% and 5%;
i) Polyamide between 45% and 55%; Polyethylene between 44% and 54% and other in a quantity less than 1%;
j) Polyethylene between 46% and 56%; Polyester between 27% and 33%; Ethylene/propylene copolymer between 7% and 11%; Ethylene vinyl alcohol between 5% and 7% and Adhesive between 3% and 5%;
k) Polyethylene between 53% and 63%; Polyester between 27% and 33%; Ethylene vinyl alcohol between 6% and 10% and Adhesive between 3% and 5%;
l) Polyethylene between 57% and 67%; Polyester between 24% and 30%; Ethylene vinyl alcohol between 5% and 9% and Adhesive between 3% and 5%.

27. Use of a multi-layer material according to any one of claims 10 to 23 for sealing at the top and with a pressure drop a support containing a product and making a pack, wherein the first main layer is placed in contact with and stuck to the support and the second main layer is positioned on the outside of the pack.

28. The use according to claim 27, wherein the multi-layer material is used to seal the support containing the product using a skin packaging technique.
